# EUROPÄISCHE PATENTANMELDUNG

(11) **EP 1 008 881 A1**
(43) Veröffentlichungstag der Anmeldung: **14.06.2000**
(21) Anmeldenummer: 98123555.9
(22) Anmeldetag: 10.12.1998
(51) Int. Cl.: G02B 6/44

(54) **Knickschutzvorrichtung für Lichtwellenleiterkabel**

(71) Anmelder: KA-TE System AG, CH-8041 Zürich (CH); Hecht, Reinhard, 93047 Regensburg (DE); Manstorfer, Karl, 93047 Regensburg (DE)
(72) Erfinder: Tresch, Rudolf, CH-5703 Seon (CH)
(74) Vertreter: Patentanwälte Schaad, Balass, Menzl & Partner AG

(57) **Zusammenfassung**

Die Schutzvorrichtung (22) für Lichtwellenleiterkabel (14) in Entwässerungsanlagen weist eine Auflagefläche (28) zur Verhinderung der Biegung der Lichtwellenleiterkabel (14) mit einem unzulässigen kleinen Radius auf. Ein erster Abschnitt (30) und ein zweiter Abschnitt (34) der Auflagefläche (28) bilden Segmente je einer Zylindermantelfläche (30', 34'). Diese beiden Abschnitte (30, 34) sind mit einem ebenen dritten Abschnitt miteinander verbunden. Dieser dritte Abschnitt und ein daran angrenzender Teil des zweiten Abschnitts (34) weisen eine Krümmung (38) um eine Krümmungsachse (40) auf, die rechtwinklig zu den Zylinderachsen (32 und 36) verläuft.

## Beschreibung

Die vorliegende Erfindung betrifft eine Schutzvorrichtung für Lichtwellenleiterkabel, vorzugsweise in Entwässerungsanlagen, wie Kanalisationsanlagen, gemäss dem Oberbegriff des Anspruchs 1.

Aus der DE-U1-298 02 655 ist eine Schutzvorrichtung dieser Art bekannt. Sie ist für den Einsatz im Übergangsbereich zwischen einem Einstiegsschacht und einem in diesen mündenden Entwässerungsrohr von Entwässerungsantagen vorgesehen. Sie weist ein Umlenkelement auf, das in einer Ebene halbkreisförmig, insbesondere als halbe Tropfenform ausgebildet ist und auf seiner radial aussenliegenden Seite eine Nut zur Aufnahme eines Lichtwellenleiters aufweist. Eine einstückige Abdeck-, Halte- und Befestigungsvorrichtung deckt einerseits die Nut ab und dient andererseits zum Hatten und Befestigen des Umlenkelements an der Wand des Einstiegsschachts. Das Umlenkelement ist von der Mündung des Entwässerungsrohres in den Einstiegsschacht schräg nach oben verlaufend angeordnet und das im Entwässerungsrohr verlegte Lichtwellenleiterkabel verläuft im Einstiegsschacht in der Nut des Umlenkelements und vom dem Entwässerungsrohr abgewandten Ende des Umlenkelements etwa geradlinig zu Haken, die an der Wand des Einstiegsschachts befestigt sind. Durch die Haken ist das Lichtwellenleiterkabel in Umfangsrichtung des Einstiegsschachts zu einem nächsten Umlenkelement geführt, über welches das Lichtwellenleiterkabel in ein weiteres Entwässerungsrohr verläuft. Die bekannte Schutzvorrichtung kann wohl ein Knicken des Lichtwellenleiterkabels bei der scharfkantigen Richtungsänderung bei der Mündung des Entwässerungsrohres in den Einstiegsschacht verhindern; das freiliegende Lichtwellenleiterkabel ist aber beim einstiegsschachtseitigen Ende der Nut und insbesondere bei den Haken gefährdet.

Es ist deshalb eine Aufgabe der vorliegenden Erfindung, eine gattungsgemässe Schutzvorrichtung zu schaffen, die ein knickfreies Führen von Lichtwellenleiterkabeln im weiteren Rahmen gewährleistet.

Diese Aufgabe wird mit einer Schutzvorrichtung gelöst, die die Merkmale des Anspruchs 1 aufweist.

Die Führung des Lichtwellenleiterkabels nicht nur in einer Ebene, sondern in einer Krümmung aus dieser heraus, gewährleistet die Einhaltung eines minimalen Biegeradius in zwei quer zueinander verlaufenden Richtungen. Mit einer einzigen platzsparenden Vorrichtung wird das Knicken von Lichtleitern an wenigstens zwei gefährdeten Stellen verhindert.

Bevorzugte Ausbildungsformen der Schutzvorrichtung sind in den abhängigen Ansprüchen angegeben.

Die Erfindung wird anhand eines in der Zeichnung dargestellten Ausführungsbeispiels näher erläutert. Es zeigen rein schematisch:
- Fig. 1: eine in einen geschnitten dargestellten Einstiegsschacht eingebaute Schutzvorrichtung in perspektivischer Darstellung von schräg oben;
- Fig. 2: den geschnitten gezeigten Einstiegsschacht mit der Schutzvorrichtung in perspektivischer Darstellung von schräg unten;
- Fig. 3: ein Umlenkelement der Schutzvorrichtung in Ansicht;
- Fig. 4: in Draufsicht das in der Fig. 3 gezeigte Umlenkelement; und
- Fig. 5: einen Schnitt durch das Umlenkelement entlang der Linie V-V der Fig. 2.

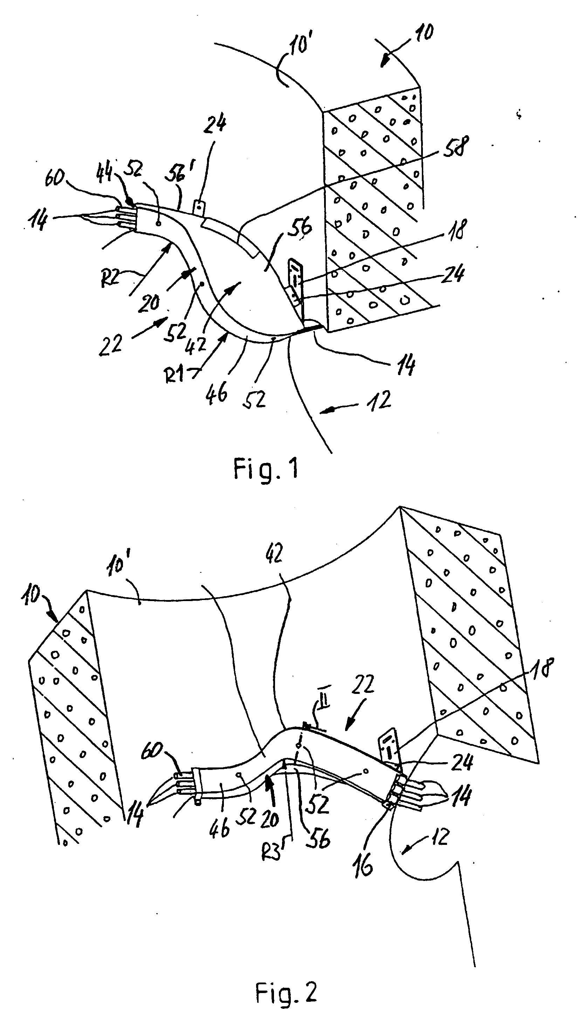

In den Fig. 1 und 2 ist geschnitten ein Einstiegsschacht 10 einer Kanalisationsanlage gezeigt, in welchen ein Kanalisationsrohr 12 mündet. Im Innern des Kanalisationsrohrs 12 sind drei nebeneinander angeordnete Lichtwellenleiterkabel 14 verlegt, die mittels nicht gezeigten Briden am Kanalisationsrohr an dessen obenliegenden, in der Regel wasserfreien Bereich befestigt sind. Bei der Mündung des Kanalisationsrohrs 12 in den Einstiegsschacht 10 ist jedes Lichtwellenleiterkabel 14 von einer Klemme 16 gehalten, die ihrerseits an einem an der Wand des Einstiegsschachts 10 befestigten Haltelement 18 fest angeordnet sind. Die in Umfangsrichtung des Kanalisationsrohres 12 nebeneinander angeordneten Klemmen 16 sind bezüglich einer Vertikalebene durch die Kanalisationsrohrlängsachse 12' beispielsweise um einen Winkel von ca. 45° versetzt angeordnet und fluchten mit der Innenwand des Kanalisationsrohres 12, so dass die Lichtwellenleiterkabel 14 dort anliegend gehalten sind.

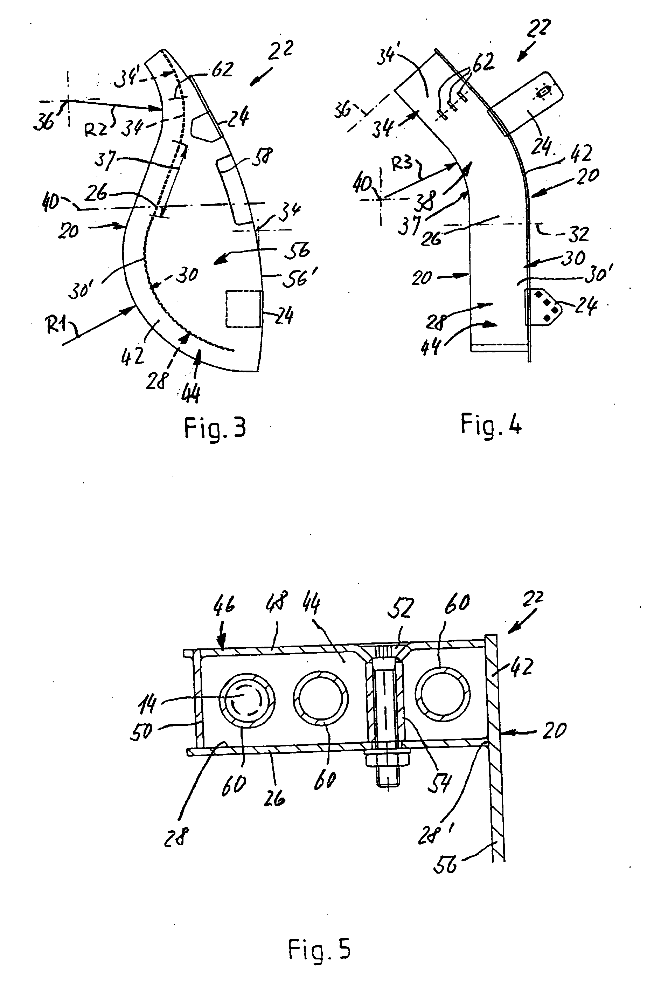

Im Einstiegsschacht 10 ist eine ein Umlenkelement 20 aufweisende Schutzvorrichtung 22 mittels Befestigungswinkelelementen 24 an der Wand 10' des Einstiegsschachts 10 befestigt. Wie dies insbesondere aus den Fig. 3 bis 5 hervorgeht, weist das Umlenkelement 20 eine von einem gebogenen Blechstreifen 26 gebildete Auflagefläche 28 für die Lichtwellenleiterkabel 14 auf. Ein erster Abschnitt 30 der Auflagefläche 28 ist als Segment einer Zylindermantelfläche 30' ausgebildet, deren Zylinderachse mit 32 bezeichnet ist. Ein zweiter Abschnitt 34 im entgegengesetzten Endbereich der Auflagefläche 28 ist in entgegengesetzter Richtung gebogen und als Segment einer zweiten Zylindermantelfläche 34' ausgebildet. Die Zylinderachse dieser zweiten Zylindermantelfläche 34' ist mit 36 bezeichnet. Sie verläuft quer zur ersten Zylinderachse 32. Zwischen dem ersten Abschnitt 30 und dem zweiten Abschnitt 34 weist die Auflagefläche 28 einen ebenen dritten Abschnitt 37 auf, so dass die Auflagefläche 28 in Ansicht gesehen eine gestreckte S-Form aufweist. Wie dies insbesondere der Fig. 4 entnehmbar ist, weist die Auflagefläche 28 im Bereich des dritten Abschnitts 37 und in einem daran anschliessenden Bereich des zweiten Abschnitts 34 eine Krümmung 38 um eine Krümmungsachse 40 auf, welche in einem Abstand rechtwinklig zu den Zylinderachsen 32 und 36 verläuft. Die Krümmung 38 erstreckt sich über einen Winkelbereich von 45°.

Der - dem Kanalisationsrohr 12 zugewandte - Endbereich des ersten Abschnitts 30 ist dazu bestimmt, wenigstens annähernd in Längsrichtung der ankommenden Lichtwellenleiterkabeln 14 zu verlaufen. Mit anderen Worten fluchtet dieser Endbereich bei montiertem Umlenkelement 20 wenigstens annähernd mit der Wand des Kanalisationsrohrs 12. Der freie Endbereich des zweiten Abschnitts 34 ist dazu bestimmt, sich vom Innern des Einstiegsschachts 10 her tangential an die Schachtwand 10' anzulegen.

Damit die Schutzvorrichtung 22 möglichst wenig Platz benötigt, handelt es sich bei der Zylindermantelfläche 30' um die Mantelfläche eines Kreiszylinders mit dem Radius R1, welcher einem minimal zulässigen Biegeradius für die Lichtwellenleiterkabel 14 entspricht. Entsprechendes gilt für die zweite Zylindermantelfläche 34', deren Radius mit R2 bezeichnet ist. Auch die Krümmung 38 erstreckt sich entlang eines Kreisbogensegments mit dem Radius R3 um die Krümmungsachse 40, welcher mindestens so gross ist wie der minimal zulässige Biegeradius für die Lichtwellenleiterkabel 14. Ist die Auflagefläche 28 in einem Bereich um zwei quer zueinander verlaufende Achsen sowohl gebogen als auch gekrümmt, ist der räumlich gemessene Radius in diesem Bereich derart gewählt, dass er nicht kleiner ist als der minimal zulässige Radius. Die der Auflagefläche 28 anliegende und in Längsrichtung der Auflagefläche 28 verlaufende Lichtwellenleiterkabel 14 sind somit gegen Knicken geschützt.

Das Umlenkelement 20 weist ein Wandelement 42 auf, das auf der bezüglich der Krümmungsachse 40 radial aussenliegenden Seite der Auflagefläche 28 entlang deren Rand 28' verläuft und mit dem Blechstreifen 26 verschweisst ist. Das Wandelement 42 und die Auflagefläche 28 verlaufen rechtwinklig zueinander, wie dies insbesondere aus der Fig. 5 hervorgeht. Die Auflagefläche 28 und das sich über die gesamte Länge der Auflagefläche 28 erstreckende Wandelement 42 bilden auf zwei Seiten die Begrenzung eines mehrfach gekrümmten, im Querschnitt rechteckigen Führungskanals 44 für die Lichtwellenleiterkabel 14, welcher an den beiden anderen Seiten durch einen Deckel 46 begrenzt ist. Das entsprechend der Auflagefläche 28 geformte Deckelbodenelement 48 ist mit dem entsprechend dem Wandelement 42 geformte Deckelwandelement 50 verschweisst. Der Deckel 46 ist mittels Schrauben 52 am die Auflagefläche 28 bildenden Blechstreifen 26 befestigt, wobei die Schrauben 52 jeweils eine im Führungskanal 44 angeordnete Deckelabstützhülse 54 durchgreifen.

Auf der bezüglich der ersten Zylinderachse 32 radial innenliegenden Seite des Blechstreifens 26 weist das Wandelement 42 eine Verlängerung auf, die als flächiges Tragwandelement 56 wirkt. Der Rand 56' des Tragwandelements 56 ist dazu bestimmt, bei montiertem Umlenkelement 20 an der Schachtwand 10' anzuliegen. Am Tragwandelement 56 sind auch die Befestigungswinkelelemente 24 befestigt. Dadurch, dass das Tragwandelement 56 einerseits mit dem die Auflagefläche 28 bildenden Blechstreifen 26 entlang dessen gesamten Länge fest verbunden und andererseits um die Krümmungsachse 40 gebogen ist, ist es selbst bei dünnwandiger Ausbildung stabil. Das Tragwandelement 56 weist bei dessen Rand 56' Sollbruchstellen 58 auf, die die Bildung eines Durchlasses ermöglichen. Durch diesen Durchlass können die die Schutzvorrichtung 22 kreuzenden Rohre und/oder Lichtwellenleiterkabel geführt werden.

Wie dies die Fig. 1 und 2 zeigen, ist die Schutzvorrichtung 22 im Bereich des ersten Abschnitts 30 von der Mündung des Kanalisationsrohres 12 her bezüglich einer vertikalen Achsialebene des Einstiegsschachts 10 um ungefähr 45° geneigt angeordnet, wogegen infolge der Krümmung 38 der dem Kanalisationsrohr 12 entfernte Endbereich der Auflagefläche 28 und somit des Führungskanals 44 in horizontaler Richtung und somit in Umfangsrichtung des Einstiegsschachts 10 verläuft. Sind die Lichtwellenleiter in ein weiteres Kanalisationsrohr 12 zu führen, wird zur Verhinderung des Knickens der Lichtwellenleiter 14 eine weitere Schutzvorrichtung 22 verwendet, die zur in der Zeichnung gezeigten Schutzvorrichtung 22 spiegelbildlich ausgebildet ist. Es ist auch möglich, mittels 90° Bogen die Lichtwellenleiter 14 im Einstiegsschacht 10 in vertikaler Richtung nach oben bzw. gegen unten zu führen. Vorzugsweise sind anschliessend an die Schutzvorrichtung 22 die Lichtwellenleiterkabel 14 in einem Kanal geschützt montiert.

In der Fig. 5 sind mit dem Bezugszeichen 60 drei Schutzrohre bezeichnet, in welchen je ein Lichtwellenleiterkabel 14 angeordnet ist. Diese Schutzrohre 60 erstrecken sich vorzugsweise über die gesamte Länge der Lichtwellenleiterkabel 14. Selbstverständlich ist es aber denkbar, auf die Schutzrohre 60, insbesondere im Bereich der Schutzvorrichtung 22, zu verzichten.

Wie weiter oben beschrieben, sind die Lichtwellenleiterkabel 14 am einen Ende der Schutzvorrichtung 22 mittels den Klemmen 16 gehalten. Im zweiten Abschnitt 34 weist der Blechstreifen 26 in das Innere des Führungskanals 44 vorstehende Oesen 62 auf, an welchen die Lichtwellenleiterkabel 14 bzw. die Schutzrohre 60, beispielsweise mittels Kabelbinder befestigt werden können.

Nachdem das Umlenkelement 20 in der gewünschten Richtung an der Schachtwand 10' befestigt worden ist, werden die Schutzrohre 60 mit den darin angeordneten Lichtwellenleiterkabeln 14 nebeneinanderliegend durch Biegen an die Auflagefläche 28 zur Anlage gebracht und an den Oesen 62 befestigt. Anschliessend wird der Deckel 46 montiert, so dass die Lichtwellenleiterkabel 14 sowohl gegen Knicken als auch gegen Einflüsse von aussen geschützt sind.

Vorzugsweise ist die Schutzvorrichtung 22 aus Blech gefertigt, das rostfrei oder mit einem rostverhindernden Belag ausgestattet ist. Dies bietet einen zuverlässigen Schutz, insbesondere auch gegen Rattenbiss. Grundsätzlich ist es aber denkbar, die Schutzvorrichtung 22 auch aus anderen Materialien, beispielsweise armiertem Kunststoff, auszubilden.

Die Krümmung 38 kann sich über unterschiedliche Winkel erstrecken. Es ist auch denkbar, die Krümmung 38 bezüglich der gezeigten Ausbildungsform in entgegengesetzter Richtung auszubilden.

Die Krümmungsachse 40 muss nicht genau rechtwinklig zu den Zylinderachsen 32, 36 verlaufen.

Falls die Platzverhältnisse es zulassen, können die Radien R1, R2, R3 grösser gewählt werden als der minimal zulässige Radius.

Selbstverständlich kann das Tragwandelement 56 anstelle der Sollbruchstellen 58 einen Durchlass aufweisen.

## Patentansprüche

1. Schutzvorrichtung für Lichtwellenleiterkabel vorzugsweise in Entwässerungsanlagen, wie Kanalisationsanlagen, welche die Einhaltung eines minimalen Biegeradius gewährleistet, mit einem eine Auflagefläche (28) für das Lichtwellenleiterkabel (14) aufweisenden Umlenkelement (20), dadurch gekennzeichnet, dass ein Abschnitt (30) der Auflagefläche (28) wenigstens annähernd als Segment einer Zylindermantelfläche (30') ausgebildet ist, und dass die Auflagefläche (28) eine Krümmung (38) um eine wenigstens annähernd rechtwinklig zur Zylinderachse (32) verlaufende Krümmungsachse (40) aufweist.

2. Schutzvorrichtung nach Anspruch 1, dadurch gekennzeichnet, dass ein zweiter Abschnitt (34) der Auflagefläche (28), in entgegengesetzter Richtung, wenigstens annähernd als Segment einer zweiten Zylindermantelfläche (34') mit einer quer zur Zylinderachse (32) verlaufenden zweiten Zylinderachse (36) ausgebildet ist.

3. Schutzvorrichtung nach Anspruch 2, dadurch gekennzeichnet, dass ein dritter Abschnitt (37) der Auflagefläche (28) zwischen dem ersten und dem zweiten Abschnitt (30;34) wenigstens annähernd in einer Ebene verläuft und dieser dritte Abschnitt (37) um die Krümmungsachse (40) gekrümmt verläuft.

4. Schutzvorrichtung nach einem der Ansprüche 1 bis 3, dadurch gekennzeichnet, dass - bei in einem Schacht montierter Schutzvorrichtung - ein freier Endbereich des ersten Abschnitts (30) dazu bestimmt ist, wenigstens annähernd mit der Innenwand eines in den Schacht (10) der Entwässerungsanlage mündenden Rohres (12) in dessen Längsrichtung zu fluchten, und die Auflagefläche (28) mit ihrem andern Endbereich dazu bestimmt ist, sich von innen her wenigstens annähernd tangential an die Innenwand (10') des Schachtes (10) anzunähern.

5. Schutzvorrichtung nach einem der Ansprüche 1 bis 4, dadurch gekennzeichnet, dass die Auflagefläche (28) streifenförmig ausgestaltet ist.

6. Schutzvorrichtung nach Anspruch 5, dadurch gekennzeichnet, dass das Umlenkelement (20) ein Wandelement (42) aufweist, das wenigstens annähernd rechtwinklig zur Auflagefläche (28) und entlang einer Längsseite (28') der Auflagefläche (28) angeordnet ist.

7. Schutzvorrichtung nach Anspruch 6, dadurch gekennzeichnet, dass das Wandelement (42) an der bezüglich der Krümmung (38) der Auflagefläche (28) radial äusseren Längsseite (28') angeordnet ist.

8. Schutzvorrichtung nach Anspruch 6 oder 7, dadurch gekennzeichnet, dass das Wandelement (42) sich wenigstens annähernd entlang der gesamten Länge der Auflagefläche (28) erstreckt.

9. Schutzvorrichtung nach einem der Ansprüche 6 bis 8, dadurch gekennzeichnet, dass das Wandelement (42) auf der bezüglich des ersten Abschnitts (30) der Auflagefläche (28) radial innenliegenden Seite eine als Tragwandelement (56) wirkende Verlängerung aufweist und - bei in einem Schacht montierter Schutzvorrichtung - dazu bestimmt ist, mit einem Rand (56') an einer Innenwand (10') des Schachtes (10) der Entwässerungsanlage wenigstens annähernd anzuliegen, und an ihr Haltemittel (24) zur Befestigung des Umlenkelements (20) angeordnet sind.

10. Schutzvorrichtung nach Anspruch 9, dadurch gekennzeichnet, dass das Tragwandelement (56) beim Rand (56') einen Durchlass oder Sollbruchstellen (58) zur Bildung eines Durchlasses aufweist.

11. Schutzvorrichtung nach einem der Ansprüche 1 bis 10, gekennzeichnet durch einen abnehmbaren, entsprechend der Auflagefläche (28) mehrfach gekrümmten Deckel (46).

12. Schutzvorrichtung nach einem der Ansprüche 1 bis 11, dass sie aus Blech gefertigt ist.
